# EUROPEAN PATENT SPECIFICATION

(11) **EP 1 385 763 B1**
(45) Date of publication and mention of the grant of the patent: **26.11.2008**
(21) Application number: 02728294.6
(22) Date of filing: 07.05.2002
(51) Int. Cl.: B65G 65/46, B65G 33/20

(54) **FEEDER TUBE FOR BULK PRODUCT**
SPEISEROHR FÜR SCHÜTTGUT
TUBE D'ALIMENTATION POUR PRODUIT EN VRAC

(30) Priority: 09.05.2001 SE 0101598
(43) Date of publication of application: 04.02.2004
(73) Proprietor: FORSBERG, Göran, S-653 50 Karlstad (SE)
(72) Inventor: FORSBERG, Göran, S-653 50 Karlstad (SE)
(74) Representative: Johansson, Lars-Erik
(86) International application number: PCT/SE2002/000870
(87) International publication number: WO 2002/090223

(56) References cited:
- WO-A1-95/21784
- SE-B- 404 684
- US-A- 3 434 605
- US-A- 4 613 035
- US-A- 5 709 296

## Description

### TECHNICAL FIELD

This invention relates to a feeder tube for bulk products, which comprises a cylindrical drum or tube in which there are accommodated a large number of inlet openings distributed along the length of the tube, a screw conveyer disposed coaxially within the tube, a first arrangement for rotating the tube about its axis, a second arrangement for rotating the screw conveyer relative to the tube, a third arrangement for moving the feeder tube in the lateral direction, and activators for the bulk product, which activators form projections on the outer side of the tube and are disposed on the tube in association with said inlet openings.

### BACKGROUND OF THE INVENTION

Feeder tubes of the above stated kind are previously known and commonly used. Example of such feeder tubes are described in Swedish Patent Applications 7611862-9, 8004499-8 and in EP-751904. This kind of feeder tube, requires an extremely low amount of power input (compared to other kind of prior art feeder tubes) to the feed-out of bulk, from a buffer storage vessel, e.g. as a silo. In some known installations it has happened that jamming has occurred after shut down, which is believed to be caused by uncontrolled flow through the tube inlet openings, and flow of bulk material through the tube and thereby causing jamming of the screw conveyer.

Another disadvantage with the known kind of design is that the maximum lateral velocity of tube, within the pile of bulk products in the silo, is rather limited. A velocity exceeding 30 mm/min is mostly not feasibly, because the bulk material then acts as a barrier making it impossible to move faster even if the lateral force is drastically increased. It is evident that if the limit velocity is reached and the lateral force is increased further, this could result in undesirably high stress within some parts of the feeder tube, e.g. leading to premature wear and failure.

It has been believed that this limited lateral velocity is a kind of implicit feature of the design related to the extremely low power consumption. Accordingly it has been believed that if the velocity would be increased this could only be achieved at the price of drastically increased energy consumption. Indeed tests have been performed which imply that changes such as increasing the rotational speed of the tube and/or increasing the width of the slots have not improved the performance of the feeder tube without drastic negative consequences.

### BRIEF DESCRIPTION OF THE INVENTION

Now it has been found that considerable improvements of the performance of a feeder tube of this specific kind may be achieved by providing a feeder tube according to claim 1. Thanks to this arrangements the feeder tube may be moved through the bulk product at considerably higher speed than is known from prior art. Furthermore this also leads to minimised risk of jamming after shut down.

According to further aspects of the invention;
- said protruding elements comprise a number of discrete protruding elements acting as agitators.
- said protruding elements comprise ridge formed elements to produce a lateral force on the bulk material being in contact with the tube.
- said ridges extend at an angle which is between 10-50 in relation to a plane perpendicular to the extension of the tube.
- protruding elements acting as agitators are also positioned at the end of the tube.
- said activator comprises plate like structure that extends across the opening at a distance from each lengthwise extending edge of the opening in a direction substantially parallel to the extension of the tube, wherein the width (b) of said plate like structure is substantially smaller than slot width (d) of said opening, such that preferably 10 mm < 2b < d.

### BRIEF DESCRIPTION OF THE DRAWINGS

In the following the invention will be described in more detail in relation to the attached drawings, in which;
Fig.1 shows a first embodiment of a feeder tube arrangement which may be used in connection with the invention,
Fig. 2 shows a cross sectional view of a feeder tube according to Fig. 1, along II-II in Fig. 3,
Fig. 3 is a detailed front view of a slot/opening of Fig. 1,
Fig. 4 shows a graph representing the capacity in relation to slot width,
Fig. 5 shows a feeder tube which may be used in connection with the invention,
Fig. 6 shows a cross section of a tube of Fig. 5,
Fig. 7 shows a fold-up of a modified embodiment of a tube which may be used in connection with the invention,
Fig. 8 shows a first modification of a cross section of a tube in Fig. 5,
Fig. 9 shows a second modification of a cross section of a tube which may be used in connection with the invention,
Fig. 10 shows a further modification of an opening of a tube which may be used in connection with the invention,
Fig. 11 shows another modification of an opening of a tube which may be used in connection with the invention,
Fig. 12 shows an embodiment of a feeder tube according to the invention, seen in a cross sectional view perpendicular to the extension of the tube,
Fig. 13 is a cross sectional view as indicated in Fig. 12,
Fig. 14 shows a further embodiment according to the invention in a similar view as Fig. 12,
Fig. 15 shows an embodiment of a feeder tube which moves laterally by rotation, which may be used in connection with the invention,
Fig.16 is an end view of an alternate feeder tube as shown in Fig. 15, and
Fig. 17 shows a further alternate embodiment of an end of a feeder tube, and
Fig. 18 shows a further alternate embodiment in a similar view as Fig. 12,
Fig. 19 shows a cross-sectional view along the indication of Fig. 18, and
Fig. 20 shows a view from above of Fig. 18,
Fig. 21 shows a view from above of a tube of a modified embodiment according to the invention,
Fig. 22 shows a tube from above of a further modified embodiment according to the invention, and
Fig. 23 shows a view from above of still a further embodiment according to the invention.

### DETAILED DESCRIPTION

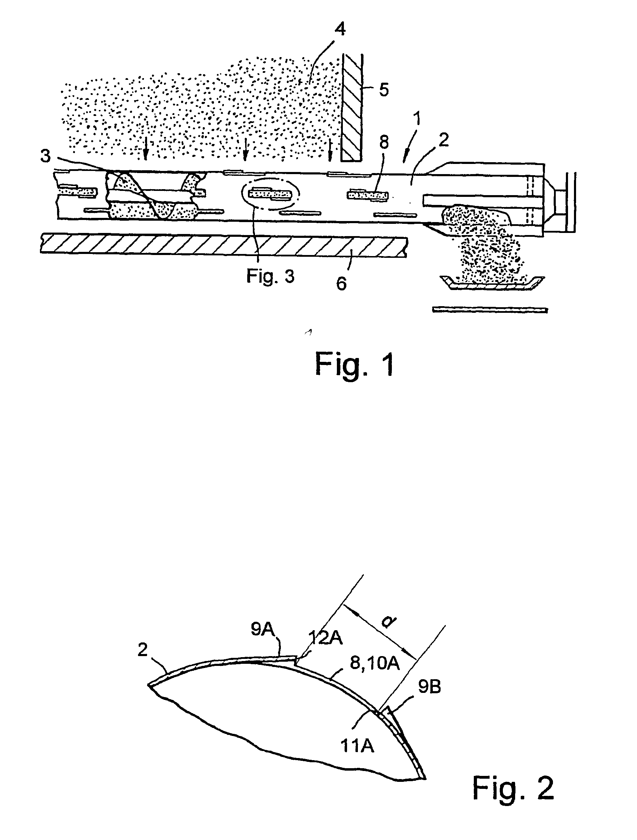

With reference first to Fig. 1, a feeder tube having a known basic construction is denoted in general by the reference numeral 1. The arrangement comprises a cylindrical tube 2 and a screw conveyer 3 disposed coaxially within the tube 2. Further, there is one motor for rotating the tube 2 about its axis, another motor for rotating the screw conveyor 3 relative to the tube and a so-called "traversing gear" for moving the entire feeder tube in the lateral direction. This lateral displacement can be effected directly at right-angels to the axis of the feeder tube 1 or about a centre of rotation, i.e. along an arc-shaped direction of travel. A silo for bulk product 4 is denoted by 5 and the bottom of the silo is denoted by 6.

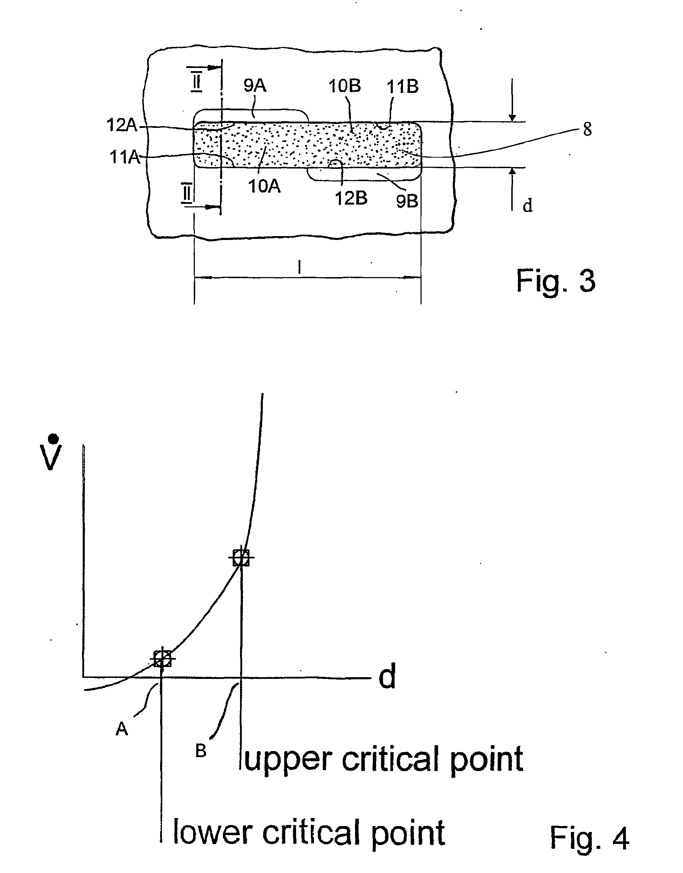

The feeder tube shown in Fig. 1 is primarily intended for difficult-to-handle and/or fibrous material, e.g. fuel consisting of forest products, particularly so-called "crushed forest fuel", in which occasional larger fragments can occur and/or in which material is easily entwined such that bridging can easily arise. In order to prevent such bridges and in order also to be able to handle occasional larger, often longer fragments, the tube 2, along its length, according to prior art has been provided with a number of helically distributed inlet openings 8, which are relatively few and relatively large. Figures 2 and 3 illustrate in greater detail how such an inlet opening 8 may be arranged. The length 1 can measure up to 500 mm, whilst the width d can measure up to 300 mm. Along the one longitudinal side, the hole edge is designed along half its length as a first activator 9A in the form of a projection of the tube wall at the hole edge. On the opposite side and within the second half of the hole edge there is a second activator 9B. The two activators 9A and 9B are thus disposed diagonally relative to each other and accommodate each half of the longitudinal side of the inlet opening 8. As a result of this geometry, there is always, regardless of the direction of rotation of the tube 2, a portion 10A or 10B, i.e. the one or the other half of the inlet opening 8, which is limited in the direction of rotation by a slot edge 11A or 11B, which has no activator, and by a hole edge 12A or 12B, which is provided with an activator 9A or 9B.

In Fig. 4 there is shown a graph representing the capacity of flow (V') through a tube 2 having a certain slot width d. As can be noted the reclaim rate is not linear in relation to the slot width d, In relation to the length 1 of the opening 8, however, the reclaim rate is linear, i.e. V'=k 1. Practical experience carried out with a tube feeder according to basic design of the feeder tube shows that the flow capacity V' is exponential, in relation to slot width d, wherein V'=k dⁿ+L, where d is slot width, and K and L are constants depending on bulk material, i.e. V'~dⁿ. Tests have shown that the exponent n preferably should be between 2-3, depending on bulk material. Accordingly the reclaim rate increases drastically above a critical point. If this critical point is passed there is no possibility to control the flow rate, which will lead to over loading the feeder tube. Accordingly the size of the slot width d should be kept securely below this critical point. In the graph this maximum slot width is represented by a first vertical line B. A second vertical line A presents a lower limit for the slot width d, in order to achieve a sufficient flow through the tube.

As a first consequence of the above findings it has been established that according to a preferred design model there should be at least two inlet openings 8 and at least two actively positioned activators in each cross section along a substantial portion of the tube 2. Thanks to this novel arrangement the tube feeder may more securely be controlled and also it may be moved with a considerably higher lateral speed through the bulk product, without any notable increase of power consumption

According to further test that have been carried out it has been found that the slot width advantageously may be related to the maximum extension X of an averaged sized specimen of the bulk product that is to be conveyed. Preferably the slot width d is between 3-10 X, more preferred 4-8 X.

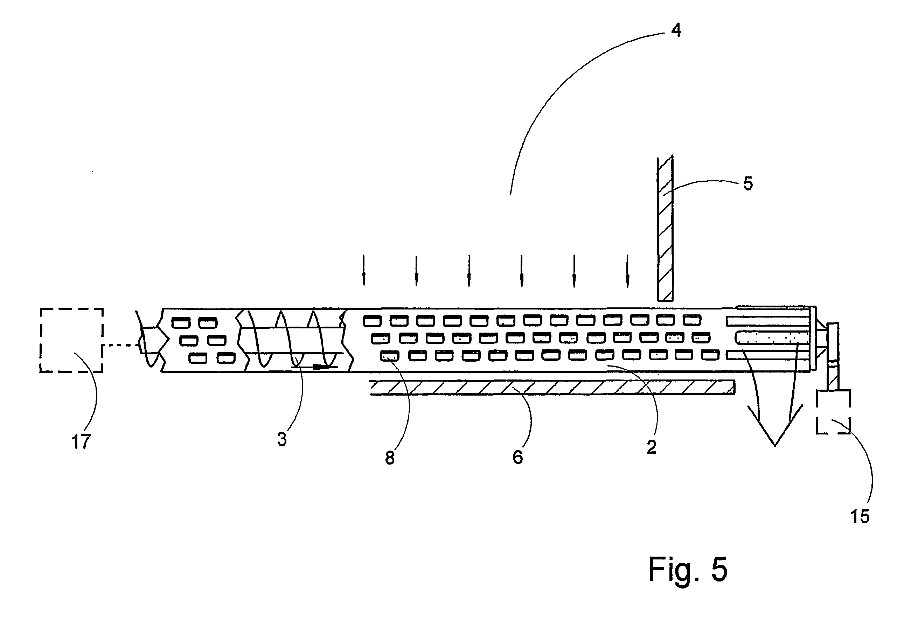

In Fig. 5 there is shown a feeder tube 1 according to the invention. There is shown a first drive 15 for driving the tube 2 and a second drive 17 for rotating the screw conveyer 3. The feeder tube is positioned in a silo 4 having wall parts 5 and bottom 6. The preferred size of the tube 2 is 500-1000 mm (diameter). The preferred length of the tube is 4-25 m. The rotational speed of the tube should be kept within 0-20 rpm, preferably 0,5-15 rpm.

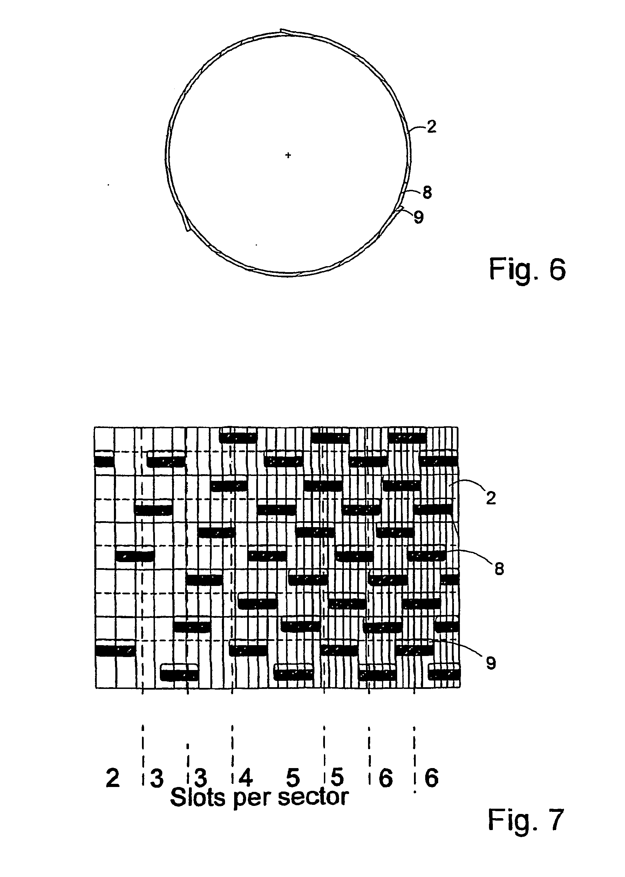

In Fig. 6 there is shown a cross section of a tube 2 in Fig. 5. As can be seen there are arranged three openings 8 and also three active activators 9 when rotating the tube 2 according to the indicated direction of rotation. Furthermore the design of Fig. 6 presents the advantage of having the openings 8 disposed along the circumference of the tube such that the bending resistance of said tube is the same irrespective of which diametrical centreline Y is chosen within said cross section. The advantages of this feature is possible when using three or four or any multiple of three or four openings in each cross section.

A tube feeder according to the novel design provides many advantages. Thanks to the optimised slot width d there will be created a material bridge over each opening 8 when the tube feeder is not in operation and accordingly covered as a consequence of shut down operation of the conveyer. Thanks to the design, the bulk material is evenly distributed along the entire length of the tube, which provides for an optimised operation of the conveyer and an optimised flow of the bulk product through the feeder tube. Furthermore the screw inside the tube is protected from the surrounding material pressure, which eliminates shear forces in the material, leads to low power requirement/material pressure and provides for small forces in screw operation and no travelling forces. All in all it provides for a very secure and energy efficient system of conveying bulk product.

In Fig. 7 there is shown a fold-up of a modified design of the tube 2 according to the invention. As can be seen there are less openings at the left hand side of the tube 2 than at the right hand side thereof. This is due to the tube being intended for use in connection with a feeder tube wherein the lateral displacement is achieved by rotating the tube about a centre of rotation. The left hand side being positioned closer to the centre of rotation. Accordingly the right hand side, where the speed is higher, the tube 2 will move at a higher lateral speed through the bulk product than the left hand side. Hence the larger number of openings at the right hand side of the tube provides for a larger capacity of flow, i.e. the maximal volumetric flow capacity at a position far away from the centre of rotation is greater than near the centre of rotation.

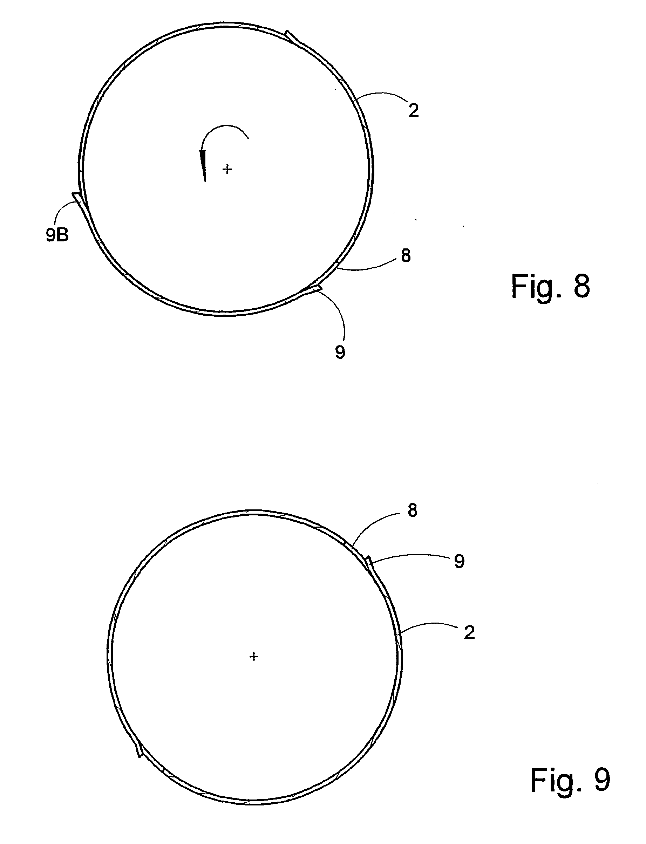

In Fig. 8 there is shown a reversible tube 2 being equipped with three openings 8 and two active activators 9 in one direction as indicated in the figure and one active activator in the opposite direction.

In Fig. 9 there is shown a further modification according to the invention showing the use of two inlet openings 8 and two active activators 9.

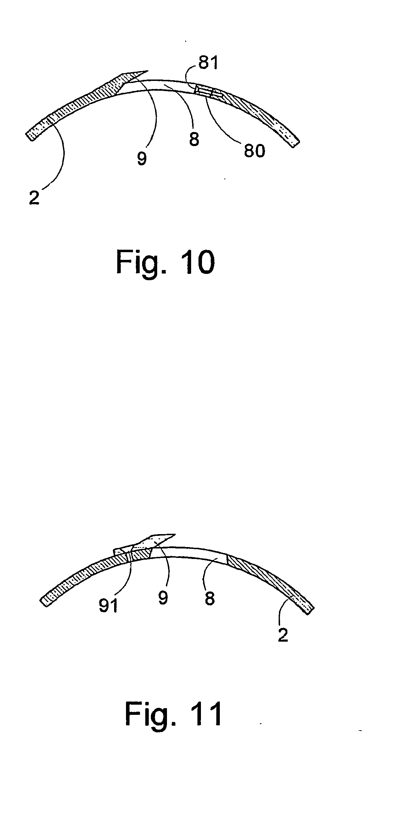

In Fig. 10 there is shown a tube 2 having a detachably arranged cover device 80, (preferably fastened by means of screws 81) in order to provide for the possibility of adjusting the width d of the opening 8, either by taking it away or replacing it with a cover device 80 of another width.

Fig. 11 presents that also the activator 9 may be detachably arranged, which is not merely advantageous if wear occurs but which also provides for the possibility of changing place for all activators 9 such that the direction of rotation may be altered.

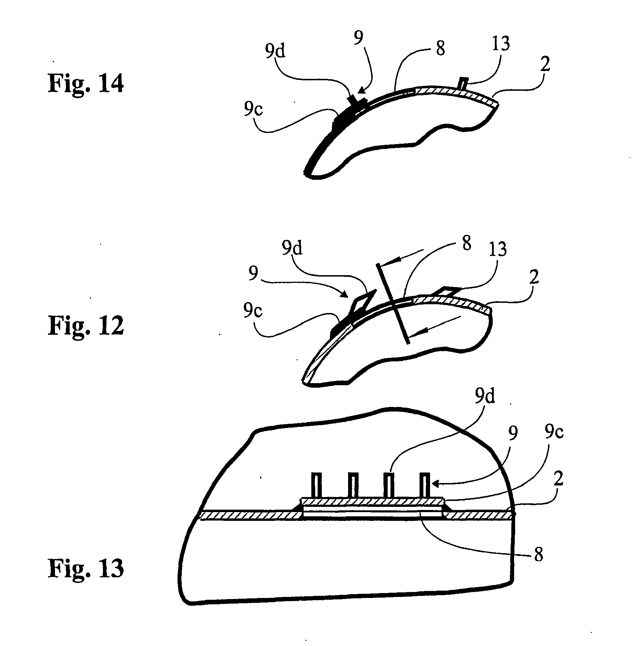

In Fig. 12 and 13 there is shown a modified embodiment where the activators 9 consist of a plate like structure 9C on top of which there are positioned a number of discrete elements 9D. This kind of activator 9D, 9C will have the same kind of function as that kind of activator having a continues extension (see Fig. 3) in the axial direction of the tube. However, depending on the material an activator 9 having discrete elements 9D as shown in Fig. 13 or continues plate like elements may be preferred in one of the other situation. In a case where the bulk material is compact and/or interlaced there can exist cavities within the bulk material, which do not fall down against the tube, since the compact/bonded material around the cavity does not allow this. The bulk material which will be treated by the rotating tube, in such a situation, may obtain a kind of hardened surface, which may hinder the tube from advancing forward into the bulk material. By the use of discrete elements 9D as shown in Fig. 13 this kind of hardened surface may be eliminated. The length of these elements 9D may vary, also on the very same tube. Normally the extension in a radial direction is between 30-90 mm above the surface of the tube 2.

As shown in Fig. 12 the same kind of discrete details 9D may also be positioned at a distance from the inlet hole 8, wherein these elements 13 will have a function as agitators 13. It is evident that this kind of agitators 13 may also be used in combination with an activator 9 having a continues extension as shown in for example Fig. 3.

In Fig. 14 it is shown that the activator elements 9D as well as the agitators 13 may take the form of cylindrical elements. The elements may be attached in different manners depending on the situation, e.g. by welding or by threads.

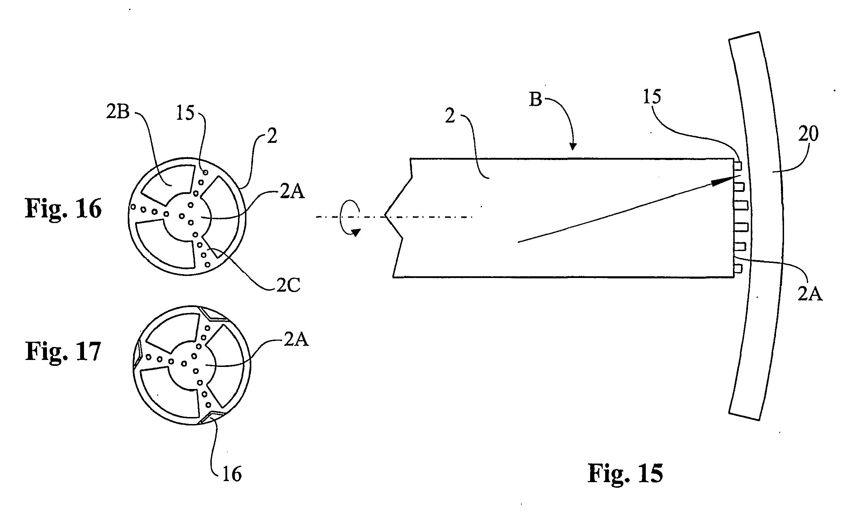

In Fig. 15 it is schematically shown a tube 2 which on top of its rotation around its axis also is rotated in the horizontal direction, i.e. a lateral displacement about the centre of rotation at the middle of the extension of the tube 2. Accordingly the end 2A of the tube 2 will move close to the wall 20 of the storage vessel. In order to avoid material from getting stuck between the end 2A and the wall 20 it is shown that the end of the tube 2 is arranged with a number of agitators 15. These agitators may take any appropriate form in general, as described above.

In Fig. 16 there is shown an end view of the tube 2 in Fig. 15. As can be seen a number of agitator elements 15 are arranged onto the adjoining parts 2C of the end wall 2A of the tube 2. In this case there is shown an embodiment of the tube with three openings 2B at the end and where the agitators 15 are centrally positioned on each one of the adjoining/supporting elements extending from the centre to the periphery of the tube end 2A.

In Fig. 17 there is shown a similar design of the end 2A of a tube 2 as in Fig. 16. A difference is that at the periphery there are arranged, plates which will displace bulk material inwardly and radially while the tube rotates, such that bulk material will be forced into the openings 2B at the tube end 2A.

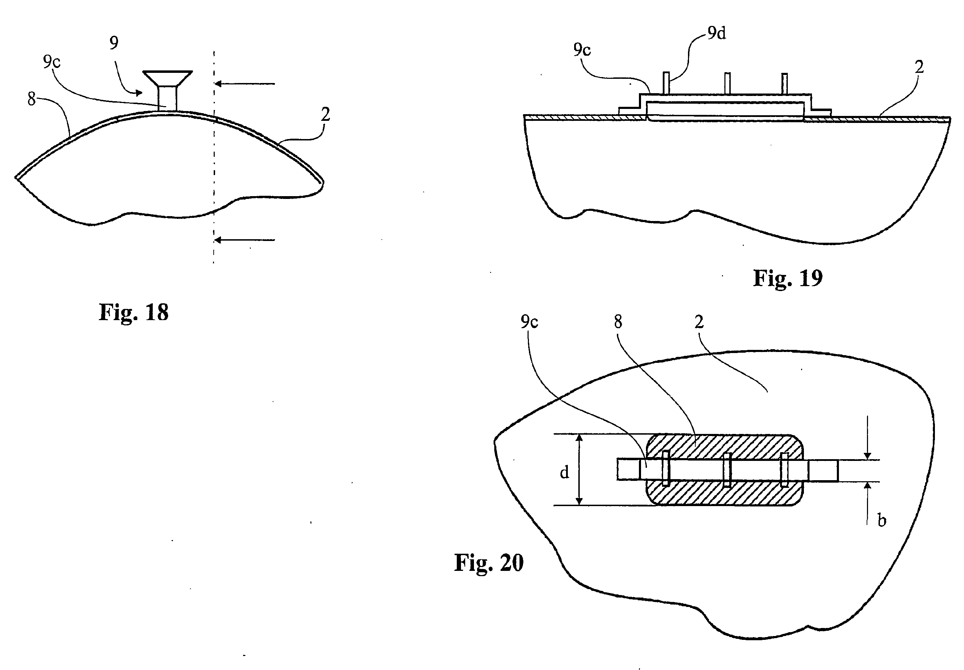

In Fig. 18, 19 and 20 there is shown a further modified embodiment where the activators 9 consist of a plate like structure 9C which extends in the axial extension of the tube 2, and which bridges over the inlet opening 8. On top of the plate like structure 9C there are positioned a number of discrete elements 9D. These elements 9D are preferably formed symmetrically, such that the direction of rotation may be altered without the need of rearranging the elements 9D. Furthermore the plate like structure 9C is positioned across the centre of the opening 8, which also provides for the possibility of changing direction of rotation without any rearrangements being needed.

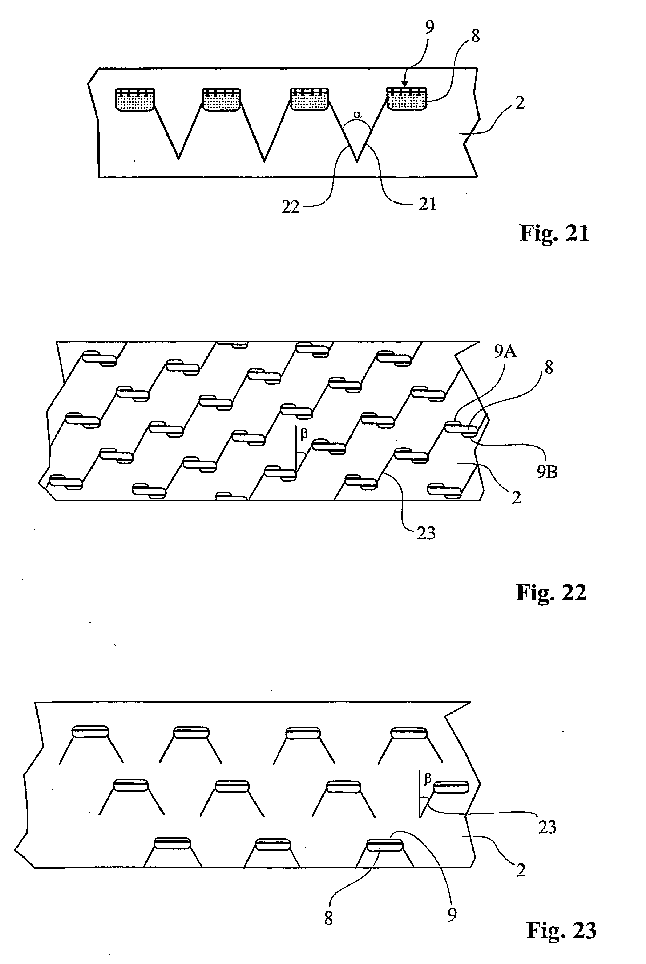

In Fig. 21 there is shown a modified embodiment of a feeder tube 2 according to the invention. On the top surface of the tube 2 between two neighbouring openings 8 there are arranged two upwardly protruding ridges 21, 22. The front end of the ridges 21, 22 are joined at a distance from the openings in a direction corresponding to the direction of rotation of the tube 2. The other end of each ridge 21, 22 terminates at the side edge of each opening 8 respectively, such that a sharp angle α is formed between the two ridges 21, 22. The ridges 21, 22 will have a plough-like influence on the bulk material that is in contact with the tube 2, such that it will be forced sideways into the openings 8. An advantage of the plough-like form is that the lateral forces acting thereon will be equalised. It is evident for the skilled man that the angle α between the ridges may vary within wide ranges, e.g. 30-90°.

In Fig. 22 there is shown a further embodiment according to the invention, where the tube 2 is arranged with the same kind of openings 8 and activators 9A, 9B as in Fig. 3 and wherein the openings 8 are more closely arranged than the openings 8 in Fig. 21.

Also in Fig. 22 there is shown the use of ridges 23 providing a similar function as the ridges 21, 22 in Fig. 21. In this case, however, the ridges 23 merely pushes the bulk material in one lateral direction, by extending from one side edge of an opening 8 to another side edge of an opening in front of it. Accordingly one ridge 23 extends from the left hand side edge of a first opening 8 to the right hand side edge of an opening being positioned laterally displaced and in front of the first opening. (Or vice versa if the lateral movement of the bulk material is intended in the other lateral direction). The extension of each ridge 23 forms an angle β in relation to a plane that is perpendicular in relation to the extensional tube 2. The angle β preferably varies within a range of about 10-50°.

In Fig. 23 there is shown a further embodiment of how ridges 23 may be positioned in relation to the openings 8 of the tube 2. Each opening 8 has been provided with a pair ridges 23 which extend from each of its side edge in a sharp angle β (preferably within a range of about 10-50°) in relation to a plane being perpendicular in relation to the extension of the tube 2.

The invention is not limited to what is described above but may be varied within the scope of the claims, accordingly it is evident that more than two, three or even four slots may be used in order to optimise the flow capacity in the different situations. The activators may not be integral with the tube 2, but may be detachable, which provides for the advantage that the direction of rotation may be changed. The feeding rate may also be adjusted by varying individual activators and/or slot opening sizes in the feeder tube. A further evident embodiment which may be combined with the invention is to use an inner screw within the tube 2 that is lacking a shaft i.e. a screw without shaft. Especially when very long tubes are being used there may be problems with the bending of the shaft of the screw within the tube. In order to avoid problems due to the bending, the shaft has to be relatively thick. As a consequence the whole tube will have to made wider, which accordingly will lead to increased cost. In such a situation it may be advantages to use a screw without shaft. The inner surface of the tube 2 may be arranged with low friction lining to support the rotating periphery of a screw without shaft. By eliminating the shaft of the screw, substantially smaller dimensions may be used an accordingly also the tube may be made smaller, which substantially reduces the cost. Moreover it is evident that a variety of combinations of different above described configurations are obvious options for the skilled person, e.g. the use of agitators 13 in combination with any of the other tube designs shown or described, the use of agitators 15 at the end of the tube 2 in combination with any of the other tube designs shown or described, the use of ridges 21,22,23 in combination with any of the other tube designs shown in or described, etc. Furthermore it is evident that the extension of the openings and activators respectively, may be varied in relation to the extension of the take, i.e. not being totally parallel in relation to each other, e.g. using an angle of about 10-30° between the extension of tube 2 and the extension of the opening 8 and/or the activator 9.

## Claims

1. Feeder tube for bulk product, which comprises a cylindrical drum or tube (2) in which there are accommodated a large number of inlet openings (8) distributed along the length of the tube, a screw conveyer (3) disposed coaxially within the tube (2), a first arrangement for rotating the tube about its axis, a second arrangement for rotating the screw conveyer (3) relative to the tube (2), a third arrangement for moving the feeder tube (1) in the lateral direction, and activators (9A, 9B) for the bulk product, which activators form projections on the outer side of the tube (2) and are disposed on the tube in association with said inlet openings (8) **characterized in that** said tube (2) on its outer surface is also arranged with a number of protruding elements (13; 21, 22; 23) which, at least partly are positioned at a distance in relation to said inlet openings (8).

2. Feeder tube according to claim 1, **characterized in that** said protruding elements comprise a number of discrete protruding elements (13; 15) acting as agitators.

3. Feeder tube according to claim 1, **characterized in that** said protruding elements comprise ridge formed elements (21, 22, 23) to produce a lateral force on the bulk material being in contact with the tube.

4. Feeder tube according to claim 3, **characterized in that** said ridges (21, 22, 23) extend at an angle (β) which is between 10-50 in relation to a plane perpendicular to the extension of the tube (2),

5. Feeder tube according to claim 2, **characterized in that** protruding elements (15) acting as agitators are also positioned at the end (2A) of the tube.

6. Feeder tube according to claim 1 or 2, **characterized in that** said activator comprises a plate like structure (3C) that extends across the opening (8) at a distance from each lengthwise extending edge of the opening (8) in a direction substantially parallel to the extension of the tube (2), wherein the width (b) of said plate like structure is substantially smaller than slot width (d) of said opening (8), such that preferably 10 mm < 2b < d.

## Patentansprüche

1. Zuführrohr für Massengut, bestehend aus einer zylindrischen Trommel oder Rohr (2), in dem eine große Anzahl Einlassöffnungen (8) angeordnet ist, die längs des Rohres verteilt sind, einem Schneckenförderer (3), der koaxial innerhalb des Rohres (2) angeordnet ist, einer ersten Vorrichtung zur Drehung des Rohres um seine Achse, einer zweiten Vorrichtung zur Drehung des Schneckenförderers (3) relativ zum Rohr (2), einer dritten Vorrichtung zur Bewegung des Zuführrohres (1) in seitlicher Richtung und Aktivatoren (9A, 9B) für das Massengut, wobei die Aktivatoren Vorsprünge an der Außenseite des Rohres (2) bilden und am Rohr zusammen mit den Einlassöffnungen (8) angeordnet sind, **dadurch gekennzeichnet, dass** das Rohr (2) an seiner Außenseite auch mit einer Anzahl hervorstehender Elemente (13; 21, 22; 23) versehen ist, die zumindest teilweise mit Abstand zu den Einlassöffnungen (8) angeordnet sind.

2. Zuführrohr nach Anspruch 1, **dadurch gekennzeichnet, dass** die hervorstehenden Elemente eine Anzahl von diskreten hervorstehenden Elementen (13; 15) umfassen, die als Rührwerk wirken.

3. Zuführrohr nach Anspruch 1, **dadurch gekennzeichnet, dass** die hervorstehenden Elemente rippenförmige Elemente (21, 22, 23) umfassen, um eine seitliche Kraft auf das Massengut, das in Kontakt mit dem Rohr ist, zu erzeugen.

4. Zuführrohr nach Anspruch 3, **dadurch gekennzeichnet, dass** die Rippen (21, 22, 23) in einem Winkel (β) abstehen, der zwischen 10 - 50 ° liegt im Verhältnis zu einer Ebene rechtwinklig zur Erstreckung des Rohres (2).

5. Zuführrohr nach Anspruch 2, **dadurch gekennzeichnet, dass** hervorstehende Elemente (15), die als Rührwerk wirken, auch am Ende (2A) des Rohres angeordnet sind.

6. Zuführrohr nach Anspruch 1 oder 2, **dadurch gekennzeichnet, dass** der Aktivator eine plattenartige Anordnung (3C) umfasst, die sich über die Öffnung (8) in einem Abstand von jeder längs verlaufenden Kante der Öffnung (8) in einer Richtung im Wesentlichen parallel zur Erstreckung des Rohres (2) erstreckt, wobei die Breite (b) der plattenartigen Anordnung wesentlich kleiner ist als die Schlitzbreite (d) der Öffnung (8), vorzugsweise 10 mm < 2b < d.

## Revendications

1. Tube d'alimentation pour produit en vrac, qui comprend un tambour ou tube cylindrique (2) dans lequel sont logés un grand nombre d'ouvertures d'entrée (8) répartis sur la longueur du tube, un transporteur à vis (3) disposé de manière coaxiale dans le tube (2), un premier agencement pour faire tourner le tube autour de son axe, un deuxième agencement pour faire tourner le transporteur à vis (3) par rapport au tube (2), un troisième agencement pour déplacer le tube d'alimentation (1) dans la direction latérale, et des activateurs (9A, 9B) pour le produit en vrac, lesquels activateurs forment des saillies sur le côté extérieur du tube (2) et sont disposés sur le tube en association avec lesdites ouvertures d'entrée (8) **caractérisé en ce que** ledit tube (2) sur sa surface extérieure est en outre agencé avec un nombre d'éléments faisant saillie (13 ; 21, 22 ; 23) qui sont, au moins partiellement disposés à une distance par rapport auxdites ouvertures d'entrée (8).

2. Tube d'alimentation selon la revendication 1, **caractérisé en ce que** les éléments faisant saillie comprennent un nombre d'éléments discrets faisant saillie (13 ; 15) agissant en tant qu'agitateurs.

3. Tube d'alimentation selon la revendication 1, **caractérisé en ce que** les éléments faisant saillie comprennent des éléments nervurés (21, 22, 23) pour produire une force latérale sur le matériau en vrac en contact avec le tube.

4. Tube d'alimentation selon la revendication 3, **caractérisé en ce que** lesdites nervures (21, 22, 23) s'étendent selon un angle (β) qui est compris entre 10 et 50 degrés par rapport à un plan perpendiculaire à l'extension du tube (2).

5. Tube d'alimentation selon la revendication 2, **caractérisé en ce que** les éléments faisant saillie (15) agissant en tant qu'agitateurs sont en outre positionnés à l'extrémité (2A) du tube.

6. Tube d'alimentation selon la revendication 1 ou 2, **caractérisé en ce que** ledit activateur comprend une structure en forme de plaque (3C) qui s'étend à travers l'ouverture (8) à une distance de chaque bord s'étendant dans le sens de la longueur de l'ouverture (8) dans une direction sensiblement parallèle à l'extension du tube (2), où la largeur (b) de ladite structure en forme de plaque est sensiblement inférieure à la largeur de la fente (d) de ladite ouverture (8), de sorte que de préférence 10 mm < 2b < d.
